# Europäisches Patentamt

## European Patent Office

## Office européen des brevets

(11) Veröffentlichungsnummer: **0 158 275**
A2

(12) # EUROPÄISCHE PATENTANMELDUNG

(21) Anmeldenummer: 85104048.5

(22) Anmeldetag: 03.04.85

(51) Int. Cl.⁴: **B 29 C 51/00**

(30) Priorität: 12.04.84 DE 3413714

(43) Veröffentlichungstag der Anmeldung:
16.10.85 Patentblatt 85/42

(84) Benannte Vertragsstaaten:
AT BE CH DE FR GB IT LI NL SE

(71) Anmelder: Enzler Kunststofftechnik Enzler + Co.
Weiler Weg 10
D-8873 Ichenhausen(DE)

(72) Erfinder: Enzler, Wolfgang
Ettenbeurer Strasse 15
D-8873 Ichenhausen(DE)

(72) Erfinder: Enzler, Herbert, Jun,
Weiler Weg 10
D-8873 Ichenhausen(DE)

(74) Vertreter: Munk, Ludwig, Dipl.-Ing.
Prinzregentenstrasse 1
D-8900 Augsburg(DE)

(54) Verfahren und Vorrichtung zur Herstellung eines wannenförmigen Formkörpers aus Kunststoff.

(57) Bei der Herstellung eines wannenförmigen, innere und äußere Bemessungskanten aufweisenden Formkörpers aus Kunststoff, wie einer Palette oder dergleichen, bei dem eine an ihrem Rand eingespannte Kunststoffplatte (12) erwärmt und anschließend an die Oberfläche einer Tiefziehform angesaugt wird, läßt sich dadurch eine hohe Form- und Maßgenauigkeit der inneren und der äußeren Bemessungskanten erreichen, daß die Tiefziehform (2) ineinander einfahrbare, einander ergänzende Formoberflächen aufweisende Formteile (14 bzw. 15) aufweist, und daß die Kunststoffplatte (12) nach Erwärmung zunächst an das ihrer einen Seite gegenüberliegende, eine den dieser Seite zugeordneten Bemessungskanten entsprechende Kontur aufweisende Formteil (15) und dann unter Beibehaltung des einerseits bereits anstehenden Vakuums an das ihrer anderen Seite gegenüberliegende, eine den dieser Seite zugeordneten Bemessungskanten entsprechende Konturierung aufweisende Formteil (14) angesaugt wird.

FIG 2

Verfahren und Vorrichtung zur Herstellung
eines wannenförmigen Formkörpers aus Kunststoff

Die Erfindung betrifft gemäß einem ersten Erfindungsgedanken ein Verfahren zur Herstellung eines wannenförmigen, innere und äußere Bemessungskanten aufweisenden Formkörpers aus Kunststoff, insbesondere eines palettenförmigen Werkstückträgers für Fertigungsautomaten, bei dem eine an ihrem Rand eingespannte Kunststoffplatte erwärmt und anschließend an die Oberfläche einer Tiefziehform angesaugt wird, und geht gemäß einem weiteren Erfindungsgedanken auf eine Vorrichtung mit einer einem Spannrahmen zugeordneten Heizeinrichtung und einer an eine Vakuumquelle anschließbaren, an

- 2 -

eine im Spannrahmen einspannbare Kunststoffplatte anstellbaren Tiefziehform.

In der nicht vorveröffentlichten Patentanmeldung P 33 27 581 sind ein Verfahren und eine Vorrichtung eingangs erwähnter Art beschrieben. Die Herstellung von wannenförmigen Paletten oder dergleichen im Tiefziehverfahren hat sich zwar als sehr wirtschaftlich erwiesen. Die bisher hierbei erzielbaren Genauigkeiten reichen jedoch für manche Einsatzzwecke nicht aus. In diesem Zusammenhang ist davon auszugehen, daß bei der Herstellung eines wannenförmigen Formkörpers durch Tiefziehen einer Kunststoffplatte diese bisher lediglich mit einer Seite an die Oberfläche der Tiefziehform angesaugt wird. Die an der Oberfläche der Form zur Anlage kommende Oberfläche des hergestellten Formkörpers ist infolge der direkten Formgebung form- und maßgenau. Im Bereich der gegenüberliegenden, lediglich indirekt verformten Oberfläche sind hierbei jedoch gewisse Ungenauigkeiten nicht zu vermeiden. Diese ergeben sich aus im Bereich der Kunststoffplatte ursprünglich bereits vorhandenen Dickentoleranzen, die hier auch am fertigen Produkt in Erscheinung treten, sowie aus aufgrund unterschiedlichen Fließvermögens sich ergebenden Dickentoleranzen und dergleichen. Dies tritt vor allem dort besonders negativ in Erscheinung, wo es darum geht, gewisse Abstände zwischen äußeren und inneren Bemessungskanten genau einzuhalten, wie dies beispielsweise bei einer als Werkstückträger dienenden Palette der Fall ist, die in einer automatischen Fertigungsmaschine selbsttätig befüllt bzw. entleert wird, da hierbei zur Vermeidung von Störungen hohe Genauigkeiten hinsichtlich der Abstände der äußeren, auf maschinenseitig vorgesehenen Führungen aufliegenden Stützflächen und der inneren, zur Werkstückaufnahme dienenden Konturen der Palette verlangt werden.

Es sind auch schon zweischalige Tiefziehformlinge bekanntgeworden. Hierbei ist es zwar möglich, die eine Schale im Bereich der Außenseite und die andere Schale im Bereich der Innenseite direkt zu verformen und damit genau zu konturieren.Unabhängig hiervon kann es hierbei jedoch beim Zusammenbau der beiden Schalen aufgrund von Dickentoleranzen zu unzulässig hohen Toleranzen hinsichtlich der Lage der inneren Bemessungkanten bezüglich der Lage der äußeren Bemessungskanten kommen. Ganz abgesehen davon ergibt sich hierbei ein gegenüber einer einschaligen Bauweise verdoppelter Materialeinsatz. Außerdem sind hier zusätzliche Herstellungschritte zum Zusammenführen der beiden Schalen erforderlich. Dies wirkt sich ungüstig auf die Herstellungskosten aus. Ein weiterer Nachteil ist darin zu sehen, daß sich hier ein von den beiden Schalen abgeschlossener Hohlraum ergibt, was nicht nur zu einer vergleichsweise hohen Bauweise und damit zu einem hohen Platzbedarf führt, sondern auch die Anbringung von bodenseitigen Ablauflöchern erschwert. Eine zweischalige Anordnung bringt demnach ersichtlich keine Lösung der weiter oben geschilderten Problematik.

Es wurden auch schon Versuche mit zweiteilig aufgebauten Werkstückträgern gemacht, die aus einem als Spritzgußformling hergestellten Rahmen und einem als Tiefziehformling hergestellten Einsatz bestehen. Nachteilig ist hierbei nicht nur die Teilevielzahl. Vielmehr lassen sich auch hierbei Montagetoleranzen nicht vermeiden, was sich ungüstig auf die Genauigkeit der Lage der inneren Bemessungskanten bezüglich der äußeren Bemessungskanten auswirkt. Ganz abgesehen davon verursacht jedoch die Verwendung von Spritzguß-

- 4 -

teilen sehr hohe Werkzeugkosten, die sich nur bei der Auflage großer Serien amortisieren. Bei kleineren Stückzahlen ergibt sich daher eine sehr schlechte Wirtschaftlichkeit.

Hiervon ausgehend ist es daher die Aufgabe der vorliegenden Erfindung, ein Verfahren eingangs erwähnter Art so zu verbessern, daß die Vorteile des normalen Tiefziehverfahrens beibehalten werden und dennoch bezüglich der Position und des gegenseitigen Abstands der äußeren und inneren Bemessungskanten enge Toleranzen eingehalten werden können. Eine weitere Aufgabe der vorliegenden Erfindung besteht darin, eine einfache und zuverlässige Vorrichtung zur Durchführung des erfindungsgemäßen Verfahrens zur Verfügung zu stellen.

Die Lösung der auf das Verfahren sich beziehenden Aufgabe besteht gemäß der Erfindung darin, daß die Kunststoffplatte nach der Erwärmung zunächst an ein ihrer einen Seite gegenüberliegendes, eine den dieser Seite zugeordneten Bemessungskanten entsprechende Kontur aufweisendes Formteil und dann unter Beibehaltung des einerseits bereits anstehenden Vakuums an ein ihrer anderen Seite gegenüberliegendes, eine den dieser Seite zugeordneten Bemessungskanten entsprechende Kontur aufweisendes Formteil angesaugt wird.

Diese Maßnahmen ergeben in vorteilhafter Weise ein mehrstufiges Tiefziehverfahren, bei dem die die den einander gegenüberliegenden Oberflächen des herzustellenden Formkörpers zugeordneten Bemessungskanten bildenden Konturen mit separaten Formteilen von unterschiedlichen Seiten nacheinander an die Kunststoffplatte angeformt werden. Die erfindungsgemäßen Maßnahmen führen demnach erstmals zu einem Tiefziehformling, bei dem sowohl die inneren als auch die hiergegen versetzten

- 5 -

äußeren Bemessungskanten durch direkte Verformung hergestellt, d. h. direkt an einer Formoberfläche zur Anlage
gebracht werden können, was eine hohe Konturen- und Maß -
genauigkeit, sowie eine hohe Abstandsgenauigkeit unter Ausschaltung sämtlicher Materialtoleranzen erwarten läßt. Da
die beiden Ansaugvorgänge zeitlich gestaffelt erfolgen, ist
in jedem Falle ein günstiges Fließverhalten gewährleistet.
Da das den ersten Ansaugvorgang bewerkstelligende Vakuum,
durch das die eine Oberfläche der Kunststoffplatte im Bereich der zunächst hergestellten Kontur am zugeordneten Formteil gehalten wird, bei der Durchführung des zweiten, der
Kontur der gegenüberliegenden Oberfläche zugeordneten Ansaugvorgangs aufrechterhalten bleibt, können sich in vorteilhafter Weise auch keine gegenseitigen Störungen, etwa
in Form einer nachträglichen Rückverformung der zunächst
hergestellten Kontur. Ein weiterer Vorteil der erfindungsgemäßen Maßnahmen ist darin zu sehen, daß sich infolge der
im Bereich sämtlicher Bemessungskanten erreichten direkten
Formgebung auch im Bereich sämtlicher Bemessungskanten
scharfkantige Formen erreichen lassen, was für eine zuverlässige Führung wichtig ist. Ein besonderer Vorteil der erfindungsgemäßen Maßnahmen ist darin zu sehen, daß das Verfahrensergebnis einen einfachen, einschaligen Tiefziehformling dargstellt, was nicht nur eine platz- und materialsparende Bauweise ergibt, sondern auch einen nachträglichen
Zusammenbau etc. entbehrlich macht und die Anbringung von
bodenseitigen Ablauflöchern etc. ohne weiteres gestattet.
Obwohl hier infolge der positiven Formgebung im Bereich
sämtlicher Bemessungskanten eine dem Spritzgußverfahren
durchaus ebenbürtige Genauigkeit erzielbar ist, ist das erfindungsgemäße Verfahren doch mit vergleichsweise einfachen
Mitteln durchführbar, da die beiden Formteile keine anein-

- 6 -

ander angepaßten Gegenkonturen benötigen, da die den direkt
verformten Oberflächen jeweils gegenüberliegenden Oberflächen
infolge des Ansaugvorgangs automatisch negativ verformt werden.

In vorteilhafter Weiterbildung der übergeordneten Maßnahmen
kann die Kunststoffplatte zunächst mit ihrer den inneren
Bemessungskanten zugeordneten Seite und dann mit ihrer den
äußeren Bemessungskanten zugeordneten Seite an das jeweilige Formteil angesaugt werden. Der den inneren Bemessungskanten zugeordnete Bereich wird hierbei in vorteilhafter
Weise aus dem noch nicht bzw. noch nicht vollständig gereckten Material herausgeformt, so daß sich in diesem Bereich,
in dem die Werkstücke aufgenommen werden und daher eine
hohe Tragfähigkeit benötigt wird, auch eine hohe Wandstärke
und damit eine hohe Tragfähigkeit ergibt.

Eine weitere vorteilhafte Maßnahme zur Fortbildung des übergeordneten Verfahrens kann darin bestehen, daß die Kunststoffplatte zunächst ohne Vakuum in das eine der Außenkontur des herzustellenden Formkörpers entsprechende Innenkontur aufweisende Formteil hineingezogen und erst im Verlauf dieses Ziehvorgangs zunächst an das eine und dann an
das andere Formteil angesaugt wird. Der hier ohne Vakuum
durchgeführte Ziehvorgang ergibt in vorteilhafter Weise eine
gute Materialverteilung, so daß lokale Materialanhäufungen
bzw. lokaler Materialmangel unterbleiben.

Die auf die Vorrichtung sich beziehende Aufgabe wird erfindungsgemäß dadurch gelöst, daß die Tiefziehform eine
einfahrbare
Matrize und eine in diese Patrize aufweist, die einander
ergänzende Formoberflächen mit eine den Bemessungskanten der jeweils zugeordneten Wandungsseite des herzustellenden Formkörpers entsprechender Konturierung aufweisen und mit zu-mindest im Bereich der den jeweils zugeordneten Bemessungskanten entsprechenden Konturierung angeordneten, an eine Vakuumquelle anschließbaren Saugkanälen versehen sind.

Die Verwendung einer stempelförmig in eine Matrize einfahrbaren Patrize ergibt in vorteilhafter Weise nicht nur eine gute Materialverteilung, sondern stellt gelichzeitig auch sicher, daß das zu verformende Material in gleichzeitiger Anlage an beiden Formteilen gehalten werden kann, so daß gegenseitige Störungen in Form von Rückverformungen etc. zuverlässig unterbleiben. Dennoch ergibt sich hierbei in vorteilhafter Weise eine sehr einfache Bearbeitung der beiden Formteile, da diese keine ineinanderpassenden Gegenkonturen benötigen, sondern lediglich flächenmäßig einander ergänzende Formoberflächen. Außerhalb der jeweiligen Formoberfläche können daher in vorteilhafter Weise unprofilierte und daher einfach herstellbare Flächen vorgesehen sein. Trotz der Zweiteiligkeit der erfindungsgemäßen Tiefziehform ergibt sich daher ersichtlich ein einfacher Formaufbau.

In vorteilhafter Weiterbildung der übergeordneten Maßnahmen kann die Relativbewegung von Patrize und Matrize durch einen Anschlag begrenzt sein. Diese Maßnahme ermöglicht eine einfache Steuerung.

Eine weitere vorteilhafte Fortbildung kann darin bestehen, daß die Matrize in einer vom Spannrahmen begrenzten, an die Vakuumquelle anschließbaren Kammer angeordnet ist und daß die Patrize mittels einer bewegbaren Saugleitung mit der Vakuumquelle verbunden ist. Die Patrize kann hierbei in vorteilhafter Weise jeden gewünschten Hub ausführen, was eine hohe konstruktive Freizügigkeit ergibt sowie eine Anpassung des jeweiligen Patrizenhubs an unterschiedliche Bedürfnisse gestattet. Zweckmäßig kann die Patrize dabei einen an die Vakuumquelle angeschlossenen Sammelraum aufweisen, von dem die Saugkanäle abgehen. Dies ergibt eine besonders einfache Verbindung sämtlicher Saugkanäle mit der Vakuumquelle.

Eine weitere vorteilhafte Maßnahme kann darin bestehen, daß die etwa parallel zur gegenseitigen Bewegungsrichtung verlaufenden Umfangsbereiche von Matrize und Patrize eine die Wanddicke des herzustellenden Formkörpers etwa um das drei- bis sechsfache übersteigenden gegenseitigen Abstand aufweisen. Hierdurch wird sichergestellt, daß das von der Patrize zunächst ohne Anliegen eines Vakuums in die Matrize hineingezogene Kunststoffmaterial nicht abgeschert wird.

Weitere zweckmäßige Fortbildungen und vorteilhafte Ausgestaltungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:

Figur 1          eine Teilansicht einer als Werkstückträger
                 dienenden Kunststoffpalette und

Figur 2          einen Schnitt durch eine erfindungsgemäße Vorrichtung zur Herstellung von Paletten gemäß
                 Figur 1.

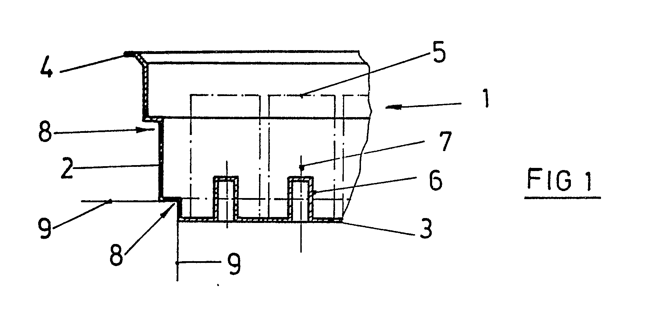

Die in Figur 1 dargestellte, als Ganzes mit 1 bezeichnete Palette besteht aus einem umlaufenden Rahmen 2, an den einerseits ein Boden 3 und andererseits eine umlaufende Randklaue 4 angeformt sind, so daß sich ein wannenförmiges Gebilde ergibt. Die dargestellte Palette 1 dient hier als Träger für lediglich durch ihre strichpunktierten Umrißlinien angedeutete, nabenförmige Werkstücke 5. Die Werkstücke 5 müssen genau fixiert sein. Hierzu ist im dargestellten Ausführungsbeispiel der Boden 3 mit in den Paletteninn- nenraum hineinragenden Zapfen 6 versehen, auf welche die nabenförmigen Werkstücke 5 aufsteckbar sind. In anderen Fällen kann der Boden 3 mit durch nach außen ausgeformte Ausbuchtungen gebildeten Vertiefungen zum Einstecken der aufzunehmenden Werkstücke versehen sein. In jedem Falle wird hierdurch die Position der aufzunehmenden Werkstücke genau fixiert. Die Randkanten bzw. Achsen der hier vorgesehenen Zapfen 6 bzw. der anderweitig etwa vorzusehenden Ausbuchtungen etc. stellen daher innere Bemessungskanten 7 dar, deren Lage bezüglich äußerer, für die Positionierung der gesamten Palette 1 maßgebender Bemessungskanten zur Vermeidung von Betriebs- störungen innerhalb enger Toleranzen vorgeschrieben ist.

Der umlaufende Rahmen 2 ist mit einer an den Boden 3 sich anschließenden und einer oberhalb dieser, hier etwa auf mittlerer Palettenhöhe, angeordneten Stufe 8 versehen. Hierdurch ergeben sich horizontale und vertikale Stützflächen, die eine exakte Aufnahme der gesamten Palette 1 auf ent- sprechenden Führungsflächen eines Bearbeitungsautomaten er- möglichen. Im dargestellten Ausführungsbeispiel soll die Palette 1 im Bereich der unteren Stufe 8 aufgenommen werden. Die Randkanten dieser Stufe bilden daher hier die äußeren Bemessungskanten 9, gegenüber denen die inneren Bemessungskanten7 genau ausgerichtet sein müssen.

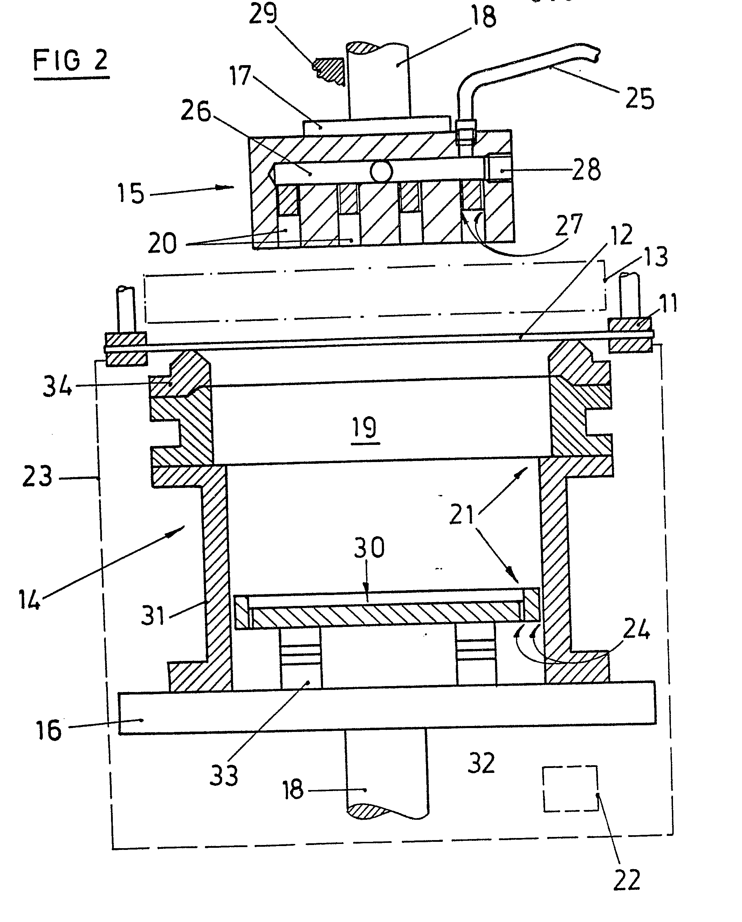

Die Palette 1 besteht aus Kunststoff und wird im Tiefziehverfahren durch entsprechende Umformung einer Kunststoffplatte hergestellt. Die hierzu dienende Tiefziehvorrichtung gemäß Figur 2 besteht in an sich bekannter Weise aus einem Spannrahmen 11, in den ide umzuformende Kunststoffplatte 12 mit ihrem Rand eingespannt wird, einer der Kusntstoffplatte 12 zugeordneten, in und außer Deckung hiermit bringbaren Heizeinrichtung 13 sowie einer zweiteiligen Form 14, 15 mit von der Kunststoffplatte 2 abdeckbaren, evakuierbaren Formhohlräumen. Die Form umfaßt eine unterhalb der Kunststoffplatte 12 angeordnete Matrize 14 und eine oberhalb der Kunststoffplatte 12 angeordnete Patrize 15, die einander ergänzende Formoberflächen aufweisen. Die Matrize und die Patrize sind als Wechseleinsätze auf einen jeweils zugeordneten Halter 16 bzw. 17 aufgespannt. Der dem unteren Halter 16 gegenüberliegende obere Halter 17 ist an einer Führungsstange 18 befestigt, die auf- und abbewegbar gelagert und vorzugsweise hydraulisch betätigbar ist. Die Heizeinrichtung 13 wird zur Aufheizung der Kunststoffplatte 12 in deckende Stellung mit dieser gebracht. Nach erfolgter Aufheizung wird die Heizeinrichtung 13 seitlich wegbewegt, so daß der Weg für die in der Wartestellung oberhalb der Heizeinrichtung 13 sich befindende Patrize 15 freigegeben wird. Der die Matrize 14 aufnehmende Halter 16 kann stationär angeordnet sein. Im dargestellten Ausführungsbeispiel ist auch dieser Halter 16 auf einer Führungsstange 18 aufgenom̄en, die auf- und abbewegbar gelagert und vorzugsweise hydraulisch betätigbar ist, so daß auch unterhalb der Kunststoffplatte 12 eine hier nicht näher dargestellte, in und außer deckende Stellung mit der Kunststoffplatte 12 bringbare Heizeinrichtung vorgesehen sein kann. Gleichzeitig ermöglicht die Höhenverstellung des unteren Halters 16 eine Anstellung des oberen Rands der Matrize 14 an die untere Oberfläche der Kunststoffplatte 12.

Die Matrize 14 enthält einen nach oben offenen Formhohlraum 19, dessen Innenkontur der Außen-kontur des umlaufenden Rahmens 2 der Palette 1 entspricht. Die Patrize 15 bildet einen in den Formhohlraum 19 der Matrize 14 von oben einfahrbaren Stempel, dessen Unterseite eine der Innenkontur des Bodens 3 der Palette 1 entsprechende Kontur aufweist, Zur Herstellung der an den Boden 3 angeformten, die inneren Bemessungskanten 7 enthaltenden Zapfen 6 ist die Patrize 15 mit nach unten offenen Ausnehmungen 20 versehen, deren Tiefe der Höhe und deren Durchmesser dem Durchmesser der Zapfen 6 entspricht. Zur Herstellung der die äußeren Bemessungskanten 9 enthaltenden Stufen 8 ist der Formhohlraum 19 der Matrize 14 mit entsprechenden Abstufungen 21 im Bereich des Innenumfangs versehen. Die inneren Bemessungskanten 7 und die äußeren Bemessungskanten 9 werden hierbei somit durch entsprechende Oberflächen der Form vorgegeben, so daß die hierbei sich ergebenden Form- und Maßtoleranzen Iediglich im Rahmen der Herstellgenauigkeit der Form sowie der Genauigkeit der Führungen der Führungsstangen 18 liegt und von Dickentoleranzen im Bereich der Kunststoffplatte 12 unabhängig ist.

Die Kunststoffplatte 12 wird zur Herstellung des Palettenbodens 3 an die Unterseite der Patrize 15 und zur Herstellung des umlaufenden Palettenrahmens 2 an die Oberfläche des Formhohlraums 19 der Matrize 14 angesaugt. Die Matrize 14 ist hierzu in einer vom Spannrahmen 11 begrenzten, dichten, über einen Stutzen 22 an eine Vakuumquelle angeschlossenen Kammer 23 angeordnet und mit zumindest im Bereich der Abstufungen 21 angeordneten, vom Formhohlraum 19 nach außen führenden Saugkanälen 24 versehen. Die Patrize 15 ist mit einem über eine bewegliche Saugleitung 25 an eine Vakuumquelle anschließbaren Sammelraum 26 versehen, von dem zu den Ausnehmungen 20 führende Saugkanäle 27 abgehen. Der Sammelraum 26 wird hier einfach durch miteinander verschnittene Längs- und Querbohrungen gebildet, die durch einen jeweils zugeordneten Einschraubstöpsel 28 verschließbar sind. Die Saugleitung 25 kann einfach als Kunststoffschlauch ausgebildet sein.

Zur Bewerkstelligung des Umformvorgangs wird die in den Spannrahmen 11 eingespannte Kunststoffplatte 12 zunächst mittels der Heizeinrichtung 13 erwärmt und damit erweicht. Nach Erreichen des gewünschten Zustands wird die Heizeinrichtung seitlich weggefahren. Gleichzeitig wird die Matrize 14 mit ihrem oberen Rand an die Unterseite der Kunststoffplatte 12 angestellt. Anschließend wird die Patrize 15 nach unten bewegt, so daß ihre Unterseite auf die Kunststoffplatte 12 aufläuft. Die erweichte Kunststoffplatte 12 wird dabei zunächst von der noch nicht mit Vakuum beaufschlagten Patrize 15 in den Formhohlraum 19 der Matrize 14 hineingezogen, was eine gute Materialverteilung ergibt. Zur Vermeidung eines Abscherens des Kunststoffmaterials sind die einander ergänzende Formoberflächen aufweisenden Formteile, hier in Form der Matrize 14 und der Patrize 15, so ausgebildet, daß zwischen den einander gegenüberliegenden, bewegungsparallelen Seitenflächen ein Abstand von etwa dem 3- bis 6fachen der Dicke der Kunststoffplatte 3 vorhanden ist. In der Praxis hat sich ein Abstand von etwa 3 cm als sehr zufriedenstellend erwiesen. Der Hub der Patrize 15 ist durch einen hier etwa mit einer nicht dargestellten Nocke der Führungsstange 18 zusammenwirkenden Anschlag 29 begrenzt. Der Anschlag 29 und die zugeordnete Nocke sind dabei so angeordnet, daß in der

- 13 -

Anschlagstellung die quer zur Bewegungsrichtung verlaufenden Oberflächenbereiche der Patrize 15 einen etwa der Wanddicke des herzustellenden Formkörpers entsprechenden Abstand von den quer zur Bewegungsrichtung verlaufenden Oberflächenbereichen der Matrize 14 aufweisen, so daß eine Pressung des Materials nach Art einer Gesenkverformung unterbleibt.

Im Verlauf der Vorrückung der Patrize 15 wird zunächst die Patrize 15 an die Vakuumquelle gelegt. Hierdurch wird die mit ihrer Oberseite bereits an der Unterseite der Patrize 15 anliegende Kunststoffplatte im Bereich der Ausnehmungen 20 angesaugt und dabei in diese eingezogen, so daß sich die Zapfen 6 des Palettenbodens 3 ergeben, deren Außenkontur und Position hierbei durch die Innenkontur und Position der patrizenseitigen Ausnehmungen 20 genau vorgegeben ist. Die Steuerung erfolgt dabei so, daß der Ansaugvorgang im Bereich des letzten Drittels der Vorrückbewegung der Patrize 15 erfolgt. Hierbei ist die Kunststoffplatte 15 noch nicht vollständig gereckt, so daß sich im Bereich des Palettenbodens 3 eine vergleichsweise große Wandstärke und damit eine hohe Tragfähigkeit ergibt. Das an den Saugkanälen 27 der Patrize 15 anliegende Vakuum wird im Verlauf der weiteren Vorrückung der Patrize 15 aufrechterhalten. Sobald die Patrize 15 in den Bereich der unteren Endstellung kommt, d. h. kurz vor oder mit Erreichen der Endstellung, wird die die Matrize 14 enthaltende Kammer 23 an die Vakuumquelle gelegt, wodurch der Formhohlraum 19 der Matrize 14 über die Saugkanäle 24 abgesaugt wird. Unter der Wirkung dieses Vakuums legen sich die nicht an der Unterseite der Patrize 15 gehaltenen, innerhalb des oberen, an der Kunststoffplatte 12 anliegenden Rands der Matrize 14 liegenden Bereiche der Kunststoffplatte 12 an die Innenkontur des Formhohlraums 19 der Matrize 14 an.

Die außerhalb des oberen Rands der Matrize 14 liegenden Bereiche legen sich dabei unter der Wirkung des in der Kammer 23 vorhandenen Vakuums an die äußere Kontur des oberen Bereichs der Matrize 14 an, wodurch sich der umlaufende Palettenrahmen 2 mit den Stufen 8 und der umlaufenden Randklaue 4 ergibt. Die Außenflächen der Stufen 8 werden dabei durch die matrizenseitig vorgesehenen Abstufungen 21 genau vorgegeben.

Nach Beendigung der Formgebung wird sowohl das über die Saugleitung 25, den Sammelraum 26 und die Absaugkanäle 27 patrizenseitig anstehende Vakuum als auch das über den Stutzen 22 und die Kammer 23 sowie die Saugkanäle 24 matrizenseitig anstehende Vakuum abgeschaltet. Anschließend wird die Patrize 15 in die der Figur 1 zugrundeliegende Wartestellung zurückgefahren. Der noch im Spannrahmen 11 gehaltene Formkörper wird dabei zunächst noch unter Anlage an der Matrize abgekühlt. Nach Erreichen der erwünschten Temperatur kann auch die Matrize 14 nach unten weggefahren werden. Anschließend kann der Formkörper aus dem Spannrahmen 11 entnommen werden.

Die vorstehenden Ausführungen lassen erkennen, daß beim beschriebenen Herstellungsverfahren sowohl die inneren Bemessungskanten 7 als auch die äußeren Bemessungskanten 9 durch direkte Anlage an einer Formoberfläche abgeformt werden, d. h. durch direkte Verformung hergestellt werden, was unter Ausschaltung sämtlicher Materialtoleranzen eine hohe Form- und Maßgenauigkeit ergibt. Da sich die Kunststoffplatte unter der Wirkung des Vakuums satt an die einander ergänzenden Formoberflächen von Matrize 14 und Patrize 15 anlegt, benötigen diese Formteile keine inein-

- 15 -

anderpassenden Gegenflächen, was eine einfache Herstellung der Matrize 14 und der Patrize 15 erlaubt. Die Patrize 15, deren Unterseite zur Herstellung des Palettenbodens 3 dient, und daher den Zapfen 6 zugeordnete Ausnehmungen 20 aufweist, kann hier glatte, unprofilierte Seitenflächen aufweisen, an denen das Kunststoffmaterial nicht zur Anlage kommt. Andererseits benötigt die Matrize 14 in dem dem Palettenboden 3 zugeordneten Bereich keine Formflächen. Im dargestellten Ausführungsbeispiel ist dieser Bereich innerhalb der unteren Abstufung 21 einfach durch einen glatten, unprofilierten Bodenbereich 30 ausgefacht. Diese Ausfachung könnte aber auch ganz enfallen, da das Kunststoffmaterial hieran praktisch nicht zur Anlage kommt. In Fällen, in denen im Bereich der Patrize sehr hohe Verformungen zu bewältigen sind, z. B. in Form sehr tiefer Zapfen etc, kann der Bodenbereich der Matrize zur Erzielung einer guten Materialverteilung auch mit den patrizenseitig vorgesehenen Ausnehmungen zugeordneten beweglichen oder starren Erhebungen versehen sein.

Die untere Abstufung 21 kann an die umlaufende Seitenwandung der Matrize 14 angeformt sein. Im dargestellten Ausführungsbeispiel besteht die Matrize 14 aus einem auf dem Halter 16 aufgesetzten, umlaufenden Rahmen 31, in den eine Bodenplatte 32 eingesetzt ist, in welche die untere Abstufung 21 eingearbeitet ist. Die Bodenplatte 32 ist hier in der Höhe verstellbar, unabhängig vom Rahmen 31 auf dem Halter 16 aufgenommen. Hierdurch ist es möglich, mit ein und demselben Werkzeug verschiedene Paletten mit unterschiedlicher Höhe herzustellen. Der Hub der Patrize 15 ist entsprechend der Stellung der Bodenplatte 32 einstellbar. Hierzu kann einfach der Anschlag 29 entsprechend verstellbar sein. Zur Abstützung der Bodenplatte 32 sind im dargestellten Ausführungsbeispiel einfach ein- oder mehrteilige Abstützböcke 33 vorgesehen. Es wäre aber auch denkbar, die Bodenplatte 32 zur Bewerkstelligung einer stufenlosen Verstellbarkeit auf einer Stellspindel etc. aufzunehmen. Bei der Bodenplatte 32 kann es sich um ein Wechselelement handeln, das in unterschiedlicher Ausgestaltung in den Rahmen 31 einsetzbar ist, so daß ohne Änderung des Rahmens 31 lediglich durch Austausch der Bodenplatte 32 unterschiedliche Konturen beispielsweise im Bereich der unteren Abstufung 21 erzielbar sind, so daß sich insgesamt eine hohe Variabilität ergibt, ohne daß hierfür zusätzliche Werkzeugkosten anfallen würden. Die Bodenplatte besitzt im Bereich ihres äußeren Rands leichtes Spiel, wodurch sich ein randseitiger Saugkanal 24 ergibt. Die im Bereich des unteren Stufenniveaus benötigten Saugkanäle können als feine Bohrungen ausgebildet sein.

Im dargestellten Ausführungsbeispiel ist eine als weiteres Wechselelement ausgebildete, auf den Rahmen 31 aufsetzbare, die Kontur der Palettenrandklaue 4 vorgebende Randleiste 34 vorgesehen. Je nach gewünschter Randklauenkontur können hierbei verschiedene Randleisten 34 auf den Rahmen 31 aufgesetzt werden. Zur Erleichterung der Herstellung des Rahmens 31 kann dieser im Bereich der oberen Abstufung 21 mit einer weiteren Teilfuge versehen sein, im Bereich der ebenfalls Saugkanäle vorgesehen sein können.

Ansprüche

1. Verfahren zur Herstellung eines wannenförmigen, innere und äußere Bemessungskanten aufweisenden Formkörpers aus Kunststoff, insbesondere eines palettenförmigen Werkzeugträgers für Fertigungsautomaten, bei dem eine an ihrem Rand eingespannte Kunststoffplatte erwärmt und anschließend an die Oberfläche einer Tiefziehform angesaugt wird, dadurch gekennzeichnet, daß die Kunststoffplatte nach der Erwärmung zunächst an ein ihrer einen Seite gegenüberliegndes, eine den dieser Seite zugeordneten Bemessungskanten entsprechende Kontur aufweisendes Formteil und dann unter Beibehaltung des einerseits bereits anstehenden Vakuums an ein ihrer anderen Seite gegenüberliegendes, eine den dieser Seite zugeordneten Bemessungskanten entsprechende Kontur aufweisendes Formteil angesaugt wird.

2. Verfahren nach Anspruch 1, dadurch gekennzeichnet, daß die Kunststoffplatte zunächst mit ihrer den inneren Bemessungskanten zugeordneten Seite und dann mit ihrer, den äußeren Bemessungskanten zugeordneten Seite an das jeweilige Formteil angesaugt wird.

3. Verfahren nach einem der vorhergehenden Ansprüche, dadurch gekennzeichnet, daß die Kunststoffplatte zunächst ohne Vakuum in das eine der Außenkontur des herzustellenden Formkörpers entsprechende Innenkontur aufweisende Formteil hineingezogen und erst im Verlauf dieses Ziehvorgangs zunächst an das eine und dann an das andere Formteil, vorzugsweise im Bereich des letzten Drittels des Ziehvorgangs an das den inneren Bemessungskanten zugeordnete Formteil und mit Beendigung des Ziehvorgangs an das den äußeren Bemessungskanten zugeordnete Formteil, angesaugt wird.

4. Verfahren nach einem der vorhergehenden Ansprüche, dadurch gekennzeichnet, daß die Kunststoffplatte nach Beendigung des zweiten Ansaugvorgangs zumindest einerseits freigegeben wird und auf dem der anderen Seite zugeordneten Formteil abgekühlt wird.

5. Vorrichtung zur Durchführung des Verfahrens nach einem der vorhergehenden Ansprüche, mit einer einem Spannrahmen (11) zugeordneten Heizeinrichtung (13) und einer an eine Vakuumquelle anschließbaren, an eine im Spannrahmen (11) einspannbare Kunststoffplatte (12) anstellbaren Tiefziehform, dadurch gekennzeichnet, daß die Tiefziehform eine Matrize (14) und eine in diese einfahrbare Patrize (15) aufweist, die einander ergänzende Formoberflächen mit einer den Bemessungskanten (7 bzw. 9) der jeweils zugeordneten Wandungsseite des herzustellenden Formkörpers (1) entsprechenden Konturierung aufweisen und mit zumindest im Bereich der den jeweils zugeordneten Bemessungskanten (7 bzw. 9) entsprechenden Konturierung (20 bzw. 21) angeordneten, an eine Vakuumquelle anschließbaren Saugkanälen
(24 bzw. 27) versehen sind.

6. Vorrichtung nach Anspruch 5, dadurch gekennzeichnet,
daß die Relativbewegung von Matrize (14) und Patrize
(15) durch einen Anschlag (29) begrenzt ist und daß
in der Anschlagstellung die quer zur gegenseitigen
Bewegungsrichtung verlaufenden Flächen der Matrize
(14) vorzugsweise um einen etwa der Wanddicke des herzustellenden Formkörpers (1) entsprechenden Abstand
von den jeweils parallelen Flächen der Patrize (15)
entfernt sind.

7. Vorrichtung nach einem der vorhergehenden Ansprüche
5 bis 6, dadurch gekennzeichnet, daß die Matrize (14)
in einer vom Spannrahmen (11) begrenzten, an die Vakuumquelle anschließbaren Kammer (23) angeordnet ist
und daß die Saugkanäle (27) der Patrize (15) mittels
einer bewegbaren Saugleitung (25) mit der Vakuumquelle verbunden sind, wobei die Patrize (15) vorzugsweise einen über die Saugleitung (25) mit der Vakuumquelle verbundenen Sammelraum (26) aufweist, von dem
die Saugkanäle (27) abgehen.

8. Vorrichtung nach einem der vorhergehenden Ansprüche
5 bis 7, dadurch gekennzeichnet, daß die Patrize (15)
die der Innenkontur des Bodens (3) des herzustellenden Formkörpers (1) entsprechende Kontur und glatte
Seitenflächen aufweist und daß die Matrize (14) die
dem umlaufenden Rahmen (2) des herzustellenden Formkörpers (1) entsprechende Kontur aufweist und vorzugsweise innerhalb der unteren Abstufung (21) durch

- 4 -

einen ebenen Bodenbereich (30) ausgefacht ist, wobei die etwa parallel zur gegenseitigen Bewegungsrichtung von Matrize (14) und Patrize (15) verlaufenden Umfangsbereiche von Matrize (14) und Patrize (15) vorzugsweise einen die Wanddicke des herzustellenden Formkörpers (1) etwa um das 2- bis 6-fache übersteigenden gegenseitigen Abstand aufweisen.

9. Vorrichtung nach einem der vorhergehenden Ansprüche 5 bis 8, dadurch gekennzeichnet, daß die Patrize (15) oberhalb der Matrize (14) angeordnet und auf einer vorzugsweise hydraulisch verschiebbaren, auf- und abbewegbar gelagerten Führungsstange (18) aufgenommen ist.

10. Formkörper aus Kunststoff, insbesondere Palette, der als einschaliger Tiefziehformling ausgebildet ist und innere und äußere Bemessungskanten aufweist, dadurch gekennzeichnet, daß sowohl die inneren Bemessungskanten (7) als auch die äußeren Bemessungskanten (9) durch direkt verformte Oberflächenbereiche gebildet werden.

FIG 1

FIG 2

0158275